# EUROPÄISCHE PATENTANMELDUNG

(11) **EP 1 647 449 A2**
(43) Veröffentlichungstag der Anmeldung: **19.04.2006**
(21) Anmeldenummer: 05021463.4
(22) Anmeldetag: 30.09.2005
(51) Int. Cl.: B60R 5/00

(54) **Verstärkter Skisack**

(30) Priorität: 14.10.2004 DE 102004050272
(71) Anmelder: BOS GmbH & Co. KG, 73760 Ostfildern (DE)
(72) Erfinder: Sitzler, Wolgang, 42111 Wuppertal (DE); Bohlke, Hartmut, 42369 Wuppertal (DE)
(74) Vertreter: Rüger, Barthelt & Abel Patentanwälte

(57) **Zusammenfassung**

Ein Skisack ist an wenigstens einer Stelle mit einer Bewehrung versehen, die verhindert, dass die Stahlkanten von Skiern im Crashfall auch den Skisack aufschneiden und anschließend Teile durch den Skisack hindurch in die Fahrgastzelle gelangen können, oder auch die Skier aus dieser Öffnung in die Fahrgastzelle fliegen können.

## Beschreibung

Zum Verstauen von Skiern in Pkw's ist es beispielsweise aus der DE 196 04 714 Al bekannt, diese in einen Skisack zu stecken. Der Skisack wird mit Hilfe von Gurtbändern im Fahrzeug gesichert. Dabei liegt er gemäß dieser Ausführungsform in dem Laderaum eines Kombi-Pkw's wobei der Laderaum durch Umlegen der Rücksitzbank entsprechend vergrößert ist. Die Verankerung der Gurte oder Gürtel geschieht in den Gurtschlössern. Bei einer anderen Ausführungsform ist vorgesehen, einen Skisack zu verwenden, der sich, von der Rückenlehne der Rücksitzbank ausgehend, in das Fahrzeuginnere erstreckt. In diesem so gebildeten Sack, wie er beispielsweise in der DE 195 13 213 Al oder der DE 44 38 909 Al gezeigt ist, werden die Skier vom Kofferraum her eingesteckt.

Bei einem Auffahrunfall drängen die Skier mit großer Kraft gegen die Sackhülle bzw. den Gürtel, mit dem der Skisack im Fahrzeug verankert ist. Je nachdem wie die Skier eingepackt sind, kann es geschehen, dass die messerscharfen Stahlkanten der Skier mit großer Kraft gegen die Sackhülle gepresst werden und dabei die Sackhülle und/oder den Gürtel, falls vorhanden, durchschneiden. Über die so entstehende Öffnung können Teile in die Fahrgastzelle geraten, oder aber die Skier selbst können beide in die Fahrgastzelle eindringen und dort Personen gefährden.

Ausgehend hiervon ist es Aufgabe der Erfindung eine Skisackanordnung zu schaffen, die weniger empfindlich gegen Aufschneiden durch die Stahlkante der Skier ist.

Diese Aufgabe wird erfindungsgemäß mit der Skisackanordnung mit den Merkmalen des Anspruches 1 gelöst.

Die neue Skisackanordnung sieht eine Sackhülle aus einem flexiblen Material vor. Die Sackhülle weist eine Einführöffnung auf, über die die Skier eingesteckt werden. Am anderen Ende ist die Sackhülle durch einen Boden verschlossen.

Um die hohe Crashsicherheit zu erhalten, ist die Skisackanordnung mit einer Verstärkung versehen, die gegenüber den Stahlkanten schnittfest ist.

Für die Anordnung der schnittfesten Verstärkung und deren Abmessungen gibt es verschiedene Möglichkeiten.

Es ist möglich die Verstärkung, zumindest auf jeder Seite der Sackhülle, anzuordnen, gegen die in der normalen Gebrauchsstellung bei einem Crash die Stahlkanten von verstauten Skiern andrücken. Die Verstärkung braucht insoweit keineswegs vollständig in Umfangsrichtung der Sackhülle angeordnet zu sein. Sie kann sich auf einen Bereich in Umfangsrichtung beschränken, oder aber auch um den gesamten Umfang erstrecken. Die Verwendung im Bodenbereich der Sackhülle ist ebenfalls von Vorteil um zu verhindern, dass die Skispitzen wegen der dort auftretenden hohen Flächenpressung die Sackhülle aufreißen oder aufschneiden.

Die Verstärkung kann auch in mehreren voneinander beabstandeten Bereichen vorgesehen sein. Die Bereiche sind in axialer Richtung nebeneinanderliegend angeordnet.

Die axiale Erstreckung kann sich durchaus auf höchstens 2% der gesamten axialen Erstreckung der Sackhülle beschränken. Die schnittfeste Verstärkung kann durch einen schnittfesten Kunststofffaden bzw. Monofilament, vorzugsweise einem Kevlarfaden gebildet sein. Der Kevlarfaden läuft in der Sackhülle in Umfangsrichtung. Der Kevlarfaden bzw. das Monofilament kann in die Sackhülle unmittelbar eingearbeitet sein, beispielsweise als Kett- oder Schussfaden, je nachdem ob der Kett- oder der Schussfaden des Gewebes in Umfangsrichtung liegt. Im Bodenbereich kann ein Kettengewirke verwendet werden, dass ebenfalls einen Kunststofffaden entsprechender Festigkeit enthält.

Eine andere Möglichkeit, die schnittfeste Verstärkung zu bekommen, besteht in der Verwendung einer Kette, deren einzelne Glieder aus Draht bestehen, wobei die freien Enden der Drahtgliederkette in dem jeweiligen Kettenglied zwischen den Ösen aufgewickelt sind.

Die schnittfeste Verstärkung kann mit der Sackhülle untrennbar verbunden sein. Sie kann aber auch als Gürtel ausgeführt sein, der beispielsweise die Sackhülle umgibt. Dieser Gürtel kann lösbar sein, oder wiederum mit der Sackhülle fest verbunden.

Anstatt das Material der Sackhülle bzw. die Sackhülle schnittfester zu gestalten ist es möglich, den schnittfesten Bereich auf den Gürtel zu beschränken, mit den die Sackhülle im Kraftfahrzeug befestigt wird. Hier kann in den Gürtel in der gleichen Weise, wie oben beschrieben, eine Kette oder ein schnittfestes Monofilament eingelegt oder eingewebt sein. Im Falle eines Gürtels ist es zweckmäßig, den Faden in Kettrichtung einzulegen, soweit es sich um einen gewebten Gürtel handelt. Dadurch entfällt die Notwendigkeit, zusätzliche schlauchförmige Taschen zu erzeugen, in die nachträglich der oder die Fäden eingelegt werden.

Im Übrigen sind Weiterbildungen der Erfindung Gegenstand von Unteransprüchen.

Beim Durchlesen der Figurenbeschreibung wird auch klar, dass eine Reihe von Abwandlungen möglich sind, die sich für den Fachmann in selbstverständlicher Weise ergeben und deswegen nicht im Einzelnen erläutert werden müssen.

In der Zeichnung sind Ausführungsbeispiele des Gegenstandes der Erfindung dargestellt. Es zeigen:
- Fig. 1: den hinteren Teil des Fahrgastraums eines Pkw, in einer teilweise aufgeschnittenen, vereinfachten perspektivischen Darstellung, mit der dort enthaltenen Box, die einen Skisack enthält;
- Fig. 2: das Fahrzeug nach Fig. 1 mit in der Gebrauchs- stellung befindlichen Skisack unter Veranschaulichung der Sicherung des Skisacks im Fondbereich;
- Fig. 3: eine Schnittdarstellung zur Veranschaulichung der Anlage der Skier an der Innenseite des Skisacks,
- Fig. 4: einen Ausschnitt aus dem Gewebe des Skisacks bzw. des Gürtels; und
- Fig. 5: eine andere Ausführungsform eines schlauchförmigen Gürtels mit eingelegter Kette in einer perspektivischen Teilansicht.

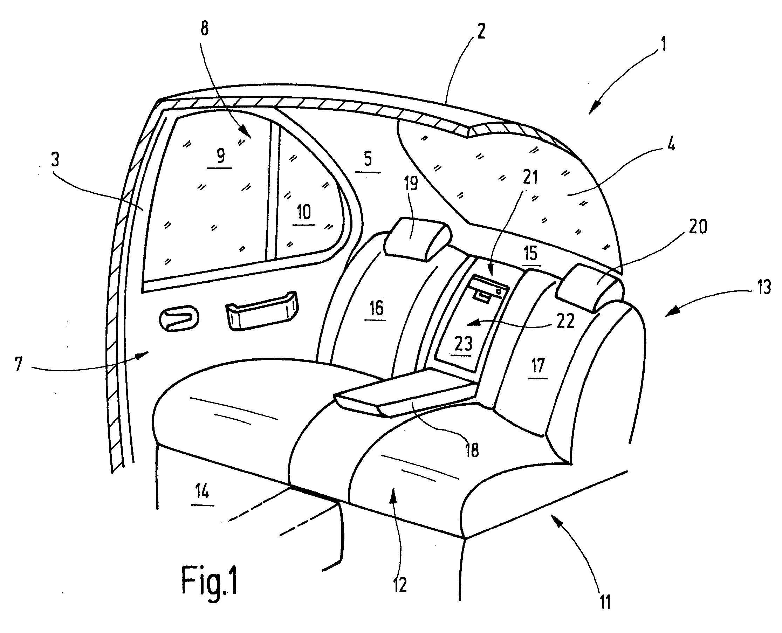

Fig. 1 stellt den aufgebrochenen abgeschnittenen Funkbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach oben zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine nicht weiter zu erkennende Innenverkleidung.

Zwischen der B-Säule 3 und der C-Säule 5 ist an der B-Säule 3 eine hintere rechte Seitentür 7 in bekannter Weise anscharniert. Die Seitentür 7 enthält in bekannter Weise ein Fenster 8, das sich in einen versenkbaren Abschnitt 9 und einen dreieckförmigen starren Abschnitt 10 aufteilt.

Auf der Höhe der hinteren rechten Seitentür 7 befindet sich eine Rücksitzbank 11, zu der eine Sitzfläche 12 sowie eine Rücksitzlehne 13 gehören. Die Rücksitzfläche 12 liegt auf einer Sockelfläche 14, die zu der Bodengruppe gehört und in der Fußräume ausgebildet sind.

Knapp unterhalb der Oberkante der Rücksitzlehne 13 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander, wie gezeigt, ein Stück weit beabstandet sind. In diesem Zwischenraum befindet sich ein Rückenlehnenabschnitt 18, der an seiner Unterkante anscharniert ist und aus der gezeigten liegenden Stellung in eine hochgeklappte Stellung geführt werden kann, in der die beiden Rückenlehnenabschnitte 16, 17 miteinander verbindet, um so einen dritten Notsitz zu schaffen. An der Oberkante der Rückenlehnenabschnitte 16 und 17 befinden sich Kopfstützen 19 und 20.

In dem normalerweise durch den mittigen Rückenlehnenabschnitt 18 verdeckten Bereich befindet sich eine Fassungsanordnung 21, in die eine Skisackbox 22 eingesetzt ist. Die Fassungsanordnung 21 ist karosseriefest, beispielsweise in der Struktur für den rechten Rückenlehnenabschnitt 16 untergebracht, wie dies heute bei Kraftfahrzeugen üblich ist.

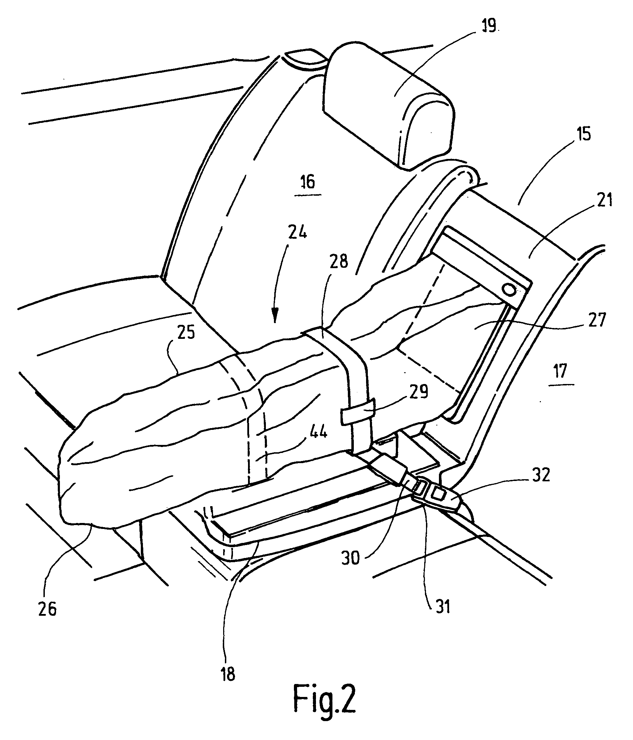

Die Skisackbox 22ist ein im Wesentlichen quaderförmiger Kasten, der an seiner Vorderseite eine am unteren Ende anscharnierte Klappe 23 trägt. Eine weitere, nicht dargestellte, Klappe verschließt die Skisackbox 22 auf der Rückseite in Richtung auf den nicht gezeigten Lade- oder Kofferraum, der sich an die Rücksitzlehne 13 anschließt. Durch Herunterklappen der vorderen Klappe 23 kann ein Skisack 24 in die Fahrgastzelle herausgezogen werden, wie dies Fig. 2 zeigt. Der Skisack 24 besteht aus einer Sackhülle 25, die am Boden bei 26 verschlossen ist. Das von dem Boden 26 abliegende Ende der Sackhülle 25 ist innerhalb des rahmenförmigen Grundkörpers verankert. Hierdurch öffnet sich der Skisack 24 mit seiner Einstecköffnung 27 in Richtung auf den Lade- oder Kofferraum.

Um ein wildes Herumschleudern des Skisacks 24 mit den darin verstauten Skiern zu vermeiden, ist ein Gürtel 28 vorgesehen, der durch an der Skisackhülle 25 vernähten Laschen 29 hindurchführt und mit Gurten 30 verbunden ist. Die Gurte 30 tragen an ihrem freien Enden Einsteckteile 31, die zum Einstecken in Gurtschlösser 32 von Sicherheitsgurten der Rücksitzbank 11 vorgesehen sind.

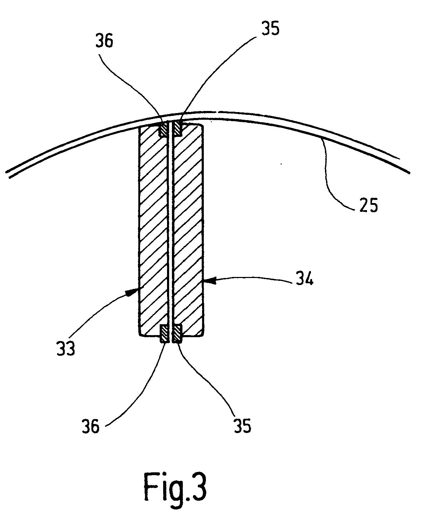

Wenn Skier in dem Skisack 24 vom Laderaum her verstaut werden, ergibt sich die in Fig. 3 im Querschnitt gezeigte Situation.

In Fig. 3 sind zu einem Paar gehörende Skier 33 und 34 im Schnitt symbolisch veranschaulicht. Sie liegen mit Ihren Laufseiten flach aufeinander. Wie zu erkennen ist, stehen seitlich aus den Grundkörpern der Skier 33 und 34 im Bereich der Lauffläche Stahlkanten 35 und 36 vor. Diese Stahlkanten 35 und 36 sind verhältnismäßig scharf. Sie liegen mehr oder weniger straff an der Innenseite der Sackhülle 25 an, und zwar besonders fest in jenem Bereich, in dem sich der Gürtel 28 befindet. Dieser kann zum sicheren Verstauen und Festlegen des Abschnittes der Skier, der in die Fahrgastzelle ragt, zugezogen werden, so dass sich dort eine Art Verschnürung ergibt.

Diese Anlagesituation ist in Fig. 3 schematisch veranschaulicht. Bei großen Kräften, wie sie bei einem Crash auftreten, in Verbindung mit der dann ebenfalls zu beachtenden unvermeidlichen Längsbewegung, besteht die Gefahr, dass die Skier 33, 34 mit ihren Stahlkanten 35, 36 die Sackhülle 25 zusammen mit dem Gürtel 28 aufschneiden. Durch die entstehende Öffnung können Teile aus dem Laderaum aufgrund des nun frei werdenden Durchgangs in die Fahrgastzelle geschleudert werden. Im schlimmsten Falle können sich durch diese Öffnung auch die Skier 33, 34 vollständig in die Fahrgastzelle geschleudert werden und dort die Fahrgäste schwer verletzen.

Um diese Situation zu vermeiden, ist die Sackhülle 25 und/oder der Gürtel 28 mit einer Bewehrung versehen, die so gestaltet ist, dass sie von den Stahlkanten 35, 36 im Crashfall nicht durchgeschnitten werden kann, soweit es sich um einen Crash handelt, der hinsichtlich der auftretenden Beschleunigungskräfte nicht nennenswert über dem Normwert liegt, wie sie im Rahmen der vorgeschriebenen Crashtests auftreten.

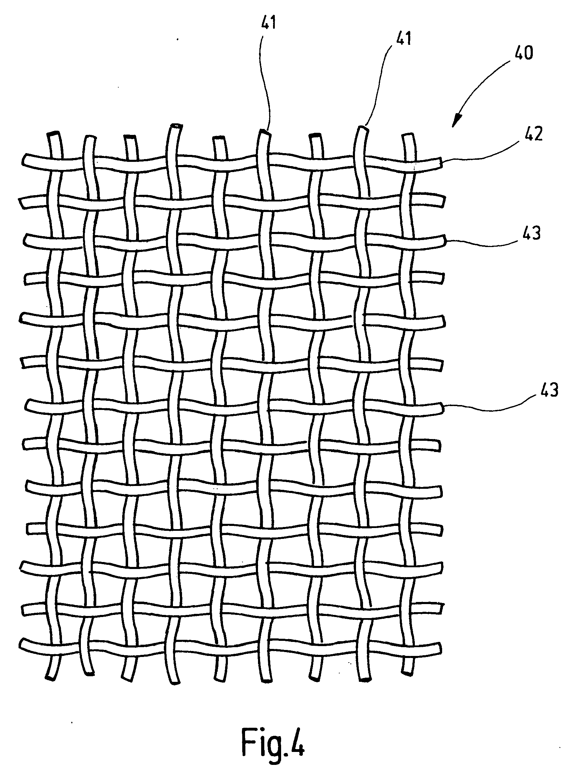

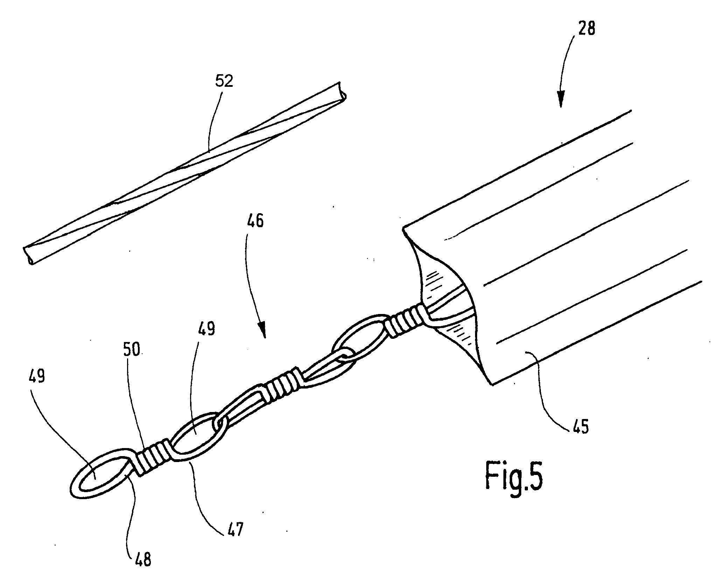

Die Figuren 4 und 5 zeigen hierzu unterschiedliche Ausführungsbeispiele.

Gemäß einem ersten Ausführungsbeispiel sei angenommen, dass die Sackhülle 25 aus einem Gewebe 40 besteht, wie es in Fig. 4 ausschnittsweise veranschaulicht ist. Bei dem Gewebe 40 handelt es sich um ein plastifiziertes Gewebe in Leinwandbindung mit Kettfäden 41 und 42. Der überwiegende Teil der Schussfäden 42 wird von Kunststoffmonofilamenten, beispielsweise in Gestalt von Polyester, gebildet. Dieses Material wäre nicht hinreichend schnittfest. Um die Schnittfestigkeit zu erreichen, sind deswegen beispielsweise einige Schussfäden 43 eingearbeitet, die aus Kevlar (eingetragener Handelsname) bestehen. Diese Faser ist bekanntlich extrem fest und wird bei entsprechendem Durchmesser der Monofilamente oder Anzahl von Monofilamenten von den Stahlkanten 35 und 36 im Crashfalle nicht durchtrennt.

Bei der Darstellung in Fig. 4 wurde davon ausgegangen, dass die Kettfäden 41 in Längsrichtung der Skisackhülle 25, d.h. von der Einsatzbox 22 bis zu dem Boden 26 verlaufen, während die Schussfäden 42 in Umfangsrichtung der Sackhülle 25 ausgerichtet sind.

Eine weitere Möglichkeit der Sicherung besteht darin, den Gürtel 27 zu bewehren. Der Gürtel 27 besteht üblicherweise aus einem Polyestergewebe, womit die Eingangs erwähnten Schwierigkeiten bei dem Gürtel 28 auftreten können. Um ihn gegen Durchschneiden mittels der Stahlkanten 35, 36 zu schützen, enthält er ebenfalls Kevlarfäden. Die Darstellung in Fig. 4 trifft insoweit auch auf das Gewebe des Gürtels 28 zu, allerdings mit dem Unterschied, dass, wie bei gürtel- oder bandförmigen Webobjekten üblich, die Kettfäden in Längsrichtung des Gürtels 28 verlaufen und die Schussfäden in Q uerrichtung. Um den gewünschten Effekt zu erreichen, symbolisieren gemäß Fig. 4 im Falle des Gürtels 28 die Fäden 42 die Kettfäden und die Fäden 41 die Schussfäden. Zumindest ein Teil der Kettfäden 42 besteht im Falle des Gürtels 28 aus Kevlarfasern 43. Die schnittfeste Armierung liegt damit in Umfangsrichtung des Skisacks 24 und verhindert an dieser Stelle ein Durchtrennen.

Sowohl im Falle der Sackhülle 25 als auch des Gürtels 28 können die schnittfesten Fäden in Gestalt der Kevlarmonofilamenten entweder kompakt dicht beieinander liegen, oder beispielsweise bei der Sackhülle 25 in größeren Abständen zueinander parallelen Schussfäden, wenn die Kettfäden, wie oben erläutert, verlaufen.

Sollte die Orientierung der Schuss- und Kettfäden in der Sackhülle 25 anders sein, nämlich die Schussfäden in Längsrichtung des Skisacks 24 liegen, versteht es sich von selbst, dass die Kettfäden aus Polyester sich mit Kettfäden aus Kevlar abwechseln.

Im Falle des Skisacks bzw. der Sackhülle können die Kevlarfäden auch kompakt in kritischen Bereichen nebeneinander verlaufen, beispielsweise in einer in Fig. 2 gestrichelt angedeuteten Zone 44. Die Zone 44 führt im Abstand zu dem Gürtel 27 in Umfangsrichtung um die Sackhülle 25 herum.

Um ein Durchstechen der Skispitzen durch den Boden 26 zu verhindern, kann es gegebenenfalls zweckmäßig sein, an der Innenseite des Bodens 26 einen Gewebeabschnitt 40 einzunähen oder einzukleben, der im Wesentlichen nur aus Kevlarfasern besteht.

Fig. 5 zeigt schließlich eine Anordnung, bei der die Bewehrung des Gürtels 28 nicht durch Kunststofffasern erfolgt. Der Gürtel 28 gemäß Fig. 5 besteht aus einer schlauchförmigen Hülle 45, die wiederum ein Gewebe oder ein Gewirke sein kann. im Inneren dieser schlauchförmigen Hülle 45 verläuft eine Drahtgliederkette 46 in Längsrichtung. Die einzelnen Drahtglieder 47 sind so gestaltet, dass sie sich unter Zug nicht öffnen. Hierzu sind die freien Drahtenden des Drahtabschnittes, der ein Kettenglied 47 bildet, um einen mittleren Abschnitt 48 zwischen den beiden Kettengliedösen 49, wie bei 50 angedeutet, herumgewickelt.

Anstelle der Kette 46 kann in die Schlauchhülle 45 auch ein Band aus Kevlar, eine Litze aus Kevlar oder eine Litze aus Metalldraht eingelegt eingelegt sein, wie sie bei 52 in Fig. 5 gezeigt ist. Die Litze kann auch in einem mit dem Skisack 24 vernähten Schlauch enthalten sein.

Es ist lediglich wichtig, dass zur Bewehrung in Umfangsrichtung des Skisacks 24 Bewehrungen verlaufen, die gegenüber den Stahlkanten 35, 36 im zu berücksichtigenden Kräftebereich schnittfest sind.

Die Erfindung wurde in Verbindung mit einem Skisack 24 erläutert, der innerhalb einer Öffnung in der Rücksitzlehne 13 verankert ist. Es ist jedoch ohne weiteres einleuchtend, dass diese Bewehrung auch bei Skisäcken zur Anwendung kommen kann, die offen liegend in dem Laderaum von Kombi-Pkw's verankert werden, beispielsweise eines Skisacks, wie er in der DE 196 04 714 A1 beschrieben ist, auf die hier ausdrücklich Bezug genommen ist, (incorporated by reference).

Dabei schützt insbesondere der dort vorhandene Gürtel den Skisack dagegen, dass von den Skiern der an dieser Art von Skisack vorhandene Reißverschluss aufgerissen wird und anschließend der Gürtel selbst durchtrennt wird.

Wichtig ist bei der Armierung lediglich darauf zu achten, dass sie hinreichend flexibel ist, um das Verstauen des Skisacks in der Box 22 oder in einer sonstigen Aufbewahrungstasche nicht zu behindern.

Ein Skisack ist an wenigstens einer Stelle mit einer Bewehrung versehen, die verhindert, dass die Stahlkanten von Skiern im Crashfall auch den Skisack aufschneiden und anschließend Teile durch den Skisack hindurch in die Fahrgastzelle gelangen können, oder auch die Skier aus dieser Öffnung in die Fahrgastzelle fliegen können.

## Patentansprüche

1. Skisackanordnung (24) zum Verstauen von Skiern (32,33) in einem Kraftfahrzeug (1),
mit einer Sackhülle (25), die aus einem flexiblen Material besteht und die eine Einführöffnung sowie einen Boden (26) aufweist, und
mit einer Verstärkung oder Bewehrung (43,46), die gegenüber Stahlkanten (35,36) von Skier (33,34) schnittfest ist.

2. Skisackanordnung nach Anspruch 1, **dadurch gekennzeichnet, dass** die Verstärkung oder Bewehrung (43,46) zumindest auf jener Seite der Sackhülle (25) angeordnet ist, gegen die in der normalen Gebrauchsstellung bei einem Crash die Stahlkanten (35,36) von verstauten Skiern (33,34) andrücken.

3. Skisackanordnung nach Anspruch 1, **dadurch gekennzeichnet, dass** die Verstärkung oder Bewehrung (43,46) linienförmig oder flächig ist.

4. Skisackanordnung nach Anspruch 1, **dadurch gekennzeichnet, dass** die Verstärkung oder Bewehrung (43,46) in Umfangsrichtung der Sackhülle (25) angeordnet ist.

5. Skisackanordnung nach Anspruch 1, **dadurch gekennzeichnet, dass** die Verstärkung oder Bewehrung (43,46) auf wenigstens einen Bereich oder mehrere voneinander beabstandete Bereiche (28,43,44,46) beschränkt ist, deren axiale Erstreckung geringer als die axiale Erstreckung der Sackhülle (25), gemessen von dem Boden (26) bis zur Einführungsöffnung (27), ist.

6. Skisackanordnung nach Anspruch 5, **dadurch gekennzeichnet, dass** die axiale Erstreckung höchstens 2% der gesamten axialen Erstreckung der Sackhülle (25) ausmacht.

7. Skisackanordnung nach Anspruch 1, **dadurch gekennzeichnet, dass gekennzeichnet**, die schnittfeste Verstärkung oder Bewehrung (43,46) von einem schnittfesten Kunststofffaden (43) bzw. Monofilamente, vorzugsweise von einem Kevlarfaden, gebildet ist, der in Umfangsrichtung der Sackhülle (25) verläuft.

8. Skisackanordnung nach Anspruch 7, **dadurch gekennzeichnet, dass** der schnittfesten Kunststofffaden (43) in die Sackhülle (25) eingearbeitet ist.

9. Skisackanordnung nach Anspruch 7, **dadurch gekennzeichnet, dass** die schnittfeste Verstärkung oder Bewehrung (43,46) als Monofilament oder als Faden in einer aus einem Gewebe (40) bestehenden Sackhülle (25) enthalten ist.

10. Skisackanordnung nach Anspruch 1, **dadurch gekennzeichnet, dass** die Sackhülle (25) aus einem textilen Flächengebilde (40) besteht.

11. Skisackanordnung nach Anspruch 1, **dadurch gekennzeichnet, dass** die schnittfeste Verstärkung oder Bewehrung (43,46) von wenigstens einer Metallkette (46), einer Metalldrahtlitze, einer schnittfesten Kunststofflitze oder gebildet ist, die in Umfangsrichtung der Sackhülle (25) verläuft.

12. Skisackanordnung nach Anspruch 1, **dadurch gekennzeichnet, dass** die schnittfeste Verstärkung oder Bewehrung (43,46) mit der Sackhülle (25) untrennbar verbunden ist.

13. Skisackanordnung nach Anspruch 1, **dadurch gekennzeichnet, dass** die schnittfeste Verstärkung oder Bewehrung (43,46) Bestandteil der Sackhülle (25) ist.

14. Skisackanordnung nach Anspruch 1, **dadurch gekennzeichnet, dass** zur Verankerung in dem Kraftfahrzeug (1) zumindest ein Gürtel (28) vorgesehen ist, der den Skisack (24) zumindest teilweise in Umfangsrichtung umgibt.

15. Skisackanordnung nach Anspruch 14, **dadurch gekennzeichnet, dass** die schnittfeste Verstärkung oder Bewehrung (43,46) untrennbarer Bestandteil des Gürtels (28) ist, der die Sackhülle (25) im Gebrauchszustand zumindest teilweise umgibt.

16. Skisackanordnung nach Anspruch 15, **dadurch gekennzeichnet, dass** die schnittfeste Verstärkung oder Bewehrung (43,46) als Monofilament (43) in dem aus einem Gewebe (40) oder Gewirke bestehenden Gürtel (28) enthalten ist.

17. Skisackanordnung nach Anspruch 15, **dadurch gekennzeichnet, dass** die schnittfeste Verstärkung oder Bewehrung (43,46) von wenigstens einer Metallkette (46), einer Metalldrahtlitze, einer schnittfesten Kunststofflitze gebildet ist, die in dem schlauchförmigen Gürtel enthalten ist.

18. Skisackanordnung nach Anspruch 17, **dadurch gekennzeichnet, dass** Metallkette (46) in dem Gürtel (28) enthalten ist.
